# EUROPÄISCHE PATENTSCHRIFT

(11) **EP 3 953 624 B1**
(45) Veröffentlichungstag und Bekanntmachung des Hinweises auf die Patenterteilung: **06.09.2023**
(21) Anmeldenummer: 20717830.2
(22) Anmeldetag: 06.04.2020
(51) Int. Cl.: F16K 27/02

(54) **EXPLOSIONSSCHUTZVENTIL ZUR ENTKOPPLUNG VON ANLAGEN- ODER WERKTEILEN MIT EINEM DICHTUNGSRING**
EXPLOSION PROTECTION VALVE FOR DECOUPLING SYSTEM PARTS OR WORKPIECES, COMPRISING A SEAL RING
SOUPAPE ANTIDÉFLAGRANTE POUR LE DÉSACCOUPLEMENT DE PARTIES D'INSTALLATIONS OU DE PIÈCES, DOTÉE D'UNE BAGUE D'ÉTANCHÉITÉ

(30) Priorität: 08.04.2019 DE 102019205027
(43) Veröffentlichungstag der Anmeldung: 16.02.2022
(73) Patentinhaber: Rico Sicherheitstechnik AG, 9100 Herisau (CH)
(72) Erfinder: ZAUGG, Loïc, 9100 Herisau (CH); ALOI, Walter, 9443 Widnau (CH); KERN, Jürgen, 8570 Weinfelden (CH); AGATONOVIC, Aleksandar, 9240 Uzwil (CH); ZELLWEGER, Daniel, 9056 Gais (CH)
(74) Vertreter: Rau, Schneck & Hübner Patentanwälte Rechtsanwälte PartGmbB
(86) Internationale Anmeldenummer: PCT/EP2020/059721
(87) Internationale Veröffentlichungsnummer: WO 2020/207949

(56) Entgegenhaltungen:
- EP-A1- 2 916 050
- CH-A5- 674 066
- CH-A5- 694 303

## Beschreibung

Die vorliegende Patentanmeldung nimmt die Priorität der deutschen Patentanmeldung DE 10 2019 205 027.1 in Anspruch.

Die Erfindung betrifft ein Explosionsschutzventil für die Entkopplung von Anlagen- oder Werkteilen zum Einbau in eine Rohrleitung mit den im Oberbegriff des Anspruches 1 angegebenen Merkmalen.

Derartige Explosionsschutzventile sind aus einer Vielzahl von Druckschriften insbesondere der Anmelderin bekannt. So ist das grundsätzliche Funktionsprinzip dieser Explosionsschutzventile mit einem Gehäuse, mit einem innerhalb des Gehäuses an einer Führungsstange axial geführten Schließkörper, der aus einer definierten Offenstellung bei einer Druck- oder Sogwelle in der Rohrleitung in wenigstens einer Schließbewegungsrichtung in eine dichtende Schließstellung verschiebbar ist, mit einer mit dem Schließkörper in Wirkverbindung stehenden Federanordnung an der Führungsstange zum Halten des Schließkörpers in der Offenstellung und mit einem Dichtungsring an der Innenseite des Gehäuses, gegen den der Schließkörper in seiner Schließstellung pressbar ist, aus der CH 694 303 A5 oder der CH 694 377 A5 bekannt.

In beiden Druckschriften sind zwei verschiedene Ausbildungen und Lagerungen der verwendeten Dichtungsringe offenbart. Zum einen ist ein im Querschnitt etwa tropfenförmiger Dichtungsring mit einer schlitzförmigen Aufnahmenut auf die ringförmige Stirnkante eines rohrförmigen Gehäuseabschnittes des Ventilgehäuses aufgesteckt und dort verklebt. Mit seinem Dichtbereich, an den der Schließkörper in seiner Schließstellung angepresst wird, ragt dieser Dichtring in den Strömungsquerschnitt des Ventils hinein, was die freie Strömung eines Mediums durch das Explosionsschutzventil behindert. Darüber hinaus sind die Lagerung und Abstützung des Dichtungsrings zur Gewährleistung einer möglichst guten Dichtwirkung in der Schließstellung des Ventils verbesserungsbedürftig.

Zum anderen ist eine in den Druckschriften gezeigte Variante durch einen im Querschnitt rechteckigen Dichtungsring charakterisiert, der in einen entsprechenden rückspringenden Sitz am Ventilgehäuse eingeklebt ist. Die im Querschnitt einen 90 °-Außenwinkel bildende Dichtungskante, an die der Schließkörper in der Schließstellung angepresst wird, dürfte aufgrund ihrer Scharfkantigkeit verschleißbehaftet und bezüglich der Dichtwirkung ebenfalls verbesserungsbedürftig sein. Auch ist die Rechteck-Form des Dichtungsringes bezüglich der Strömungseigenschaften des Mediums im Ventil nicht optimal.

Explosionsschutzventile mit dem grundsätzlichen Aufbau und Funktionsablauf sowie verklebte Dichtungsringe mit den beschriebenen Querschnittskonfigurationen sind auch der DE 102 13 865 B4, EP 1 579 134 B1, EP 1 897 668 B1, CH 674066 und DE 101 41 348 B4 der Anmelderin entnehmbar. CH 694 303 (Fig. 1 und 3) offenbart ein Explosionsschutzventil gemäß dem Oberbegriff des Anspruchs 1.

Der Erfindung liegt die Aufgabe zugrunde, ein Explosionsschutzventil der gattungsgemäßen Art mit einem hinsichtlich seiner Lagerung und Dichtwirkung verbesserten Dichtungsring anzugeben.

Diese Aufgabe wird laut Kennzeichnungsteil des Anspruches 1 gelöst. Erfindungsgemäß ist der Dichtungsring in einer an der Innenseite des Gehäuses angelegten, offenen Aufnahmetasche gehalten.

Durch die erfindungsgemäße Ausgestaltung wird mit Hilfe der Aufnahmetasche eine besonders stabile Lagerung des Dichtungsrings erzielt, der dabei auch relativ einfach montierbar ist.

In den abhängigen Ansprüchen sind bevorzugte Weiterbildungen des Explosionsschutzventils angegeben. So kann gemäß Anspruch 2 die Aufnahmetasche entgegen der Schließbewegungsrichtung des Schließkörpers offen sein. Der Dichtungsring wird damit in Schließbewegungsrichtung des Schließkörpers in die Aufnahmetasche eingeschoben und steht entgegen der Schließbewegungsrichtung des Schließkörpers, also in axialer Richtung davon ab. Damit wird der Dichtungsring bei der Beaufschlagung in der Schließstellung praktisch in die Aufnahmetasche hinein gepresst, was seine stabile Halterung in der kritischen Schließstellung noch verstärkt. Außerdem wird durch die erfindungsgemäße Konstruktion der Strömungsquerschnitt des Ventils in radialer Richtung nicht verengt, was strömungstechnische Vorteile mit sich bringt.

Erfindungsgemäß, ist die Aufnahmetasche auf ihrer radial nach innen weisenden Seite durch einen Rohrabschnitt des Gehäuses abgegrenzt.

Gemäß Patentanspruch 3 kann der Dichtungsring mit einem Verankerungsabschnitt in die Aufnahmetasche eingesteckt sein, dessen Querschnittsform im Wesentlichen flach-rechteckig ausgestaltet ist. Die Einstecklänge dieses Verankerungsabschnittes kann dann um mindestens ein Drittel größer als dessen radiale Dicke sein. Dies dient wiederum einer Stabilisierung der Dichtungsringlagerung, was infolge auch dem Dichtverhalten in der Schließstellung des Schließkörpers zugutekommt.

Der Dichtungsring kann durch eine an sich bekannte Klebeverbindung in der Aufnahmetasche festgelegt werden. Vorteilhafter ist allerdings eine Formschlussverbindung des Dichtungsrings in der Aufnahmetasche gemäß Anspruch 4, da damit möglicherweise auftretende Probleme mit einer Klebeverbindung und der Montageaufwand für das Kleben selbst von Haus aus entfallen. Zusätzlich ergeben sich starke Vorteile bei der Wartung des Ventils, da lange Stillstandszeiten durch Wegfall der Trocknungszeiten des benötigten Klebers entfallen. Es entfallen zudem Hilfsmittel für das Vorbehandeln der Klebestelle sowie Anpressen der Dichtung für eine saubere Verklebung mittels Pressvorrichtungen.

Weitere strömungsoptimierende Maßnahmen bei der Dichtungsausgestaltung sind erfindungsgemäß in einer Anordnung des mit dem Schließkörper in der Ventilschließstellung zusammenwirkenden Dichtabschnitts des Dichtungsrings außerhalb und entgegen der Schließbewegungsrichtung vor der Aufnahmetasche realisiert. Damit wird die Dichtwechselwirkung zwischen Schließkörper und Dichtung weiter verbessert.

Erfindungsgemäß geht der Dichtabschnitt des Dichtungsringes an seinem radial nach innen weisenden Rand glatt in den Rohrabschnitt des Gehäuses über. Damit findet also praktisch ein nahtloser Übergang zwischen Rohrabschnitt und Dichtungsring statt, was wiederum strömungstechnisch vorteilhaft ist.

Erfindungsgemäß schließt der Dichtabschnitt des Dichtungsringes an seinem radial nach außen weisenden Rand über eine umlaufende Dichtlippe an die Innenseite des Gehäuses an. Gemäß Anspruch 5 wird die ballige, insbesondere etwa viertelkreisförmige Ausbildung der Dichtungsring-Innenkontur, die von dem durch das Ventil strömenden Medium kontaktiert.

Die vorgenannten Maßnahmen dienen insbesondere bei kumulativer Anwendung einer Optimierung der Strömungsverhältnisse im Explosionsschutzventil, da die strömungskontaktierten Oberflächen weitgehend glatt flächig sind und keine Innenecken oder gar Hinterschneidungen gebildet sind.

Die weiteren bevorzugten Ausführungsformen gemäß den Ansprüchen 6 und 7 sehen vor, dass der Dichtungsring als Hohlkammerprofil mit einer umlaufenden Hohlkammer ausgebildet sein kann, die insbesondere ausschließlich im Bereich des Dichtabschnittes des Dichtungsringes verläuft. Damit wird zum einen eine saubere funktionale Trennung zwischen der Verankerung des Dichtungsringes im Gehäuse einerseits und der Verbesserung der Dichtwirkung andererseits erzielt. Im Verankerungsabschnitt ist der Dichtungsring damit nämlich massiv ausgebildet, was der stabilen Lagerung zugutekommt. Im Bereich des Dichtabschnittes ist durch die dort vorgesehene Hohlkammer eine hohe Flexibilität des Dichtungsringes gewährleistet, was ein sauberes und sattes Anliegen des Schließkörpers am gesamten Umfang des Dichtungsringes gewährleistet. Gleichzeitig können damit Toleranzen, die durch das Zusammenschweißen der Gehäuseteile, sonstige Montageprozesse und möglicherweise Unrundheiten des rotationssymmetrischen Schließkörpers hervorgerufen werden, optimal ausgeglichen werden. Der Dichtring hilft zudem, eventuellen Verzug bzw. ungleichmäßige Wärmeausdehnung durch ungleichmäßige Anströmung des Ventils mit heißem Prozessmedium aufzunehmen.

Gemäß einer weiteren bevorzugten Ausführungsformen wird der Querschnitt der Dichtung können gemäß Anspruch 8 zur Verbesserung der Montagefreundlichkeit am Verankerungsabschnitt noch Verankerungsvorsprünge auf der radial innen liegenden Seite beispielsweise in Form von Rippen oder Widerhaken vorgesehen sein. Dadurch ist der massive Verankerungsabschnitt flexibler bei der Montage, bietet jedoch genügend Kraft gegen ein Herausziehen auf.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine Ansicht eines Explosionsschutzventils aus Pfeilrichtung I nach Fig. 2,
- Fig. 2: einen Axialschnitt des Explosionsschutzventils gemäß der Schnittlinie II-II nach Fig. 1,
- Fig. 3: eine in der Schnittebene von Fig. 2 weggebrochene Perspektivdarstellung des Explosionsschutzventils gemäß Fig. 1,
- Fig. 4 und 5: vergrößerte Detailschnitte der Einzelheiten IV und V gemäß Fig. 2 sowie
- Fig. 6: einen Dichtungsring in einer zweiten Ausführungsform im Querschnitt.

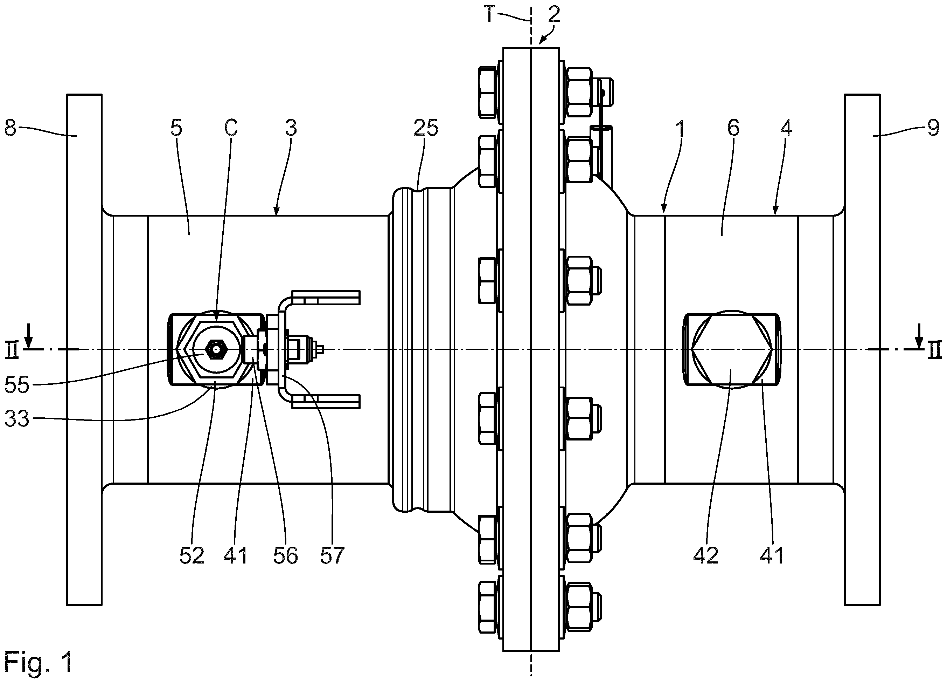

Wie aus den Fig. 1 bis 3 hervorgeht, weist das gezeigte Explosionsschutzventil ein Gehäuse 1 auf, das aus zwei an einer mittigen Flanschverbindung 2 lösbar miteinander verbundenen Gehäusehälften 3, 4 zusammengesetzt ist. Zu der Flanschverbindung 2 hin sind die beiden Gehäusehälften 3, 4 gegenüber ihren rohrförmigen Gehäuseabschnitten 5, 6 radial erweitert, um im Bereich des noch näher zu erörternden Schließkörpers 7 des Ventils einen ausreichenden Strömungsquerschnitt durch das Ventil zu gewährleisten. An den der Flanschverbindung 2 abgewandten Enden sind die Gehäusehälften 3, 4 wiederum mit Anschlussflanschen 8, 9 versehen, mit denen das Explosionsschutzventil in eine nicht dargestellte Rohrleitung eingebaut werden kann.

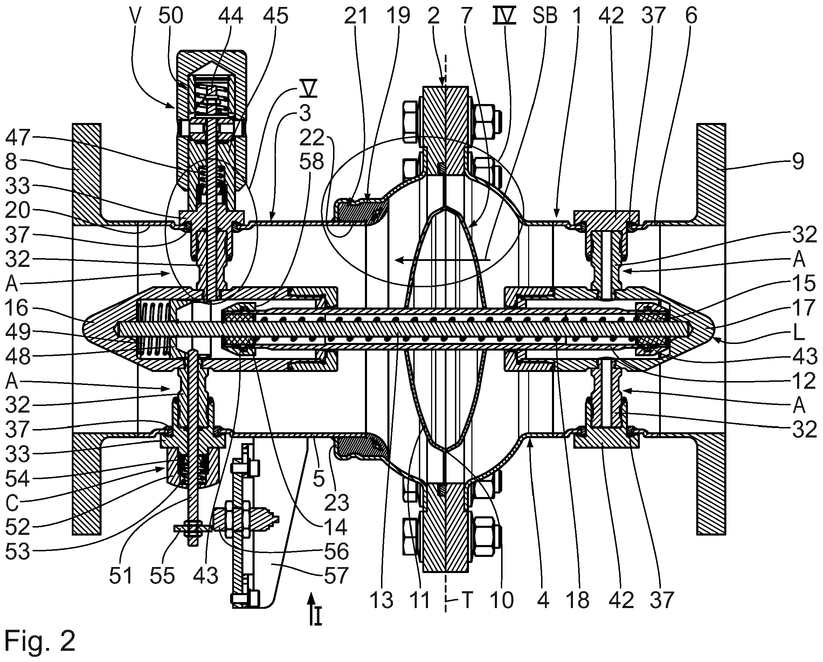

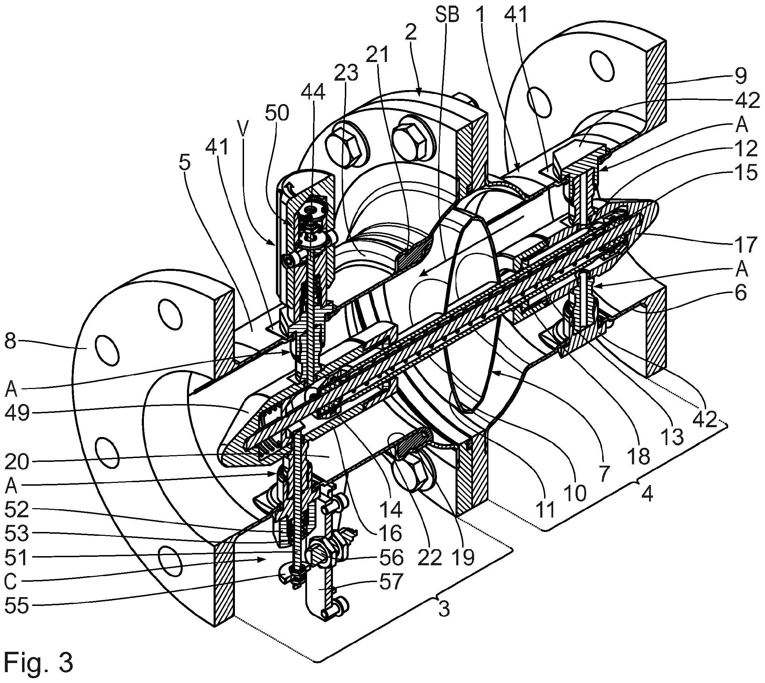

Anhand von Fig. 2 und 3 ist der innere Aufbau des Explosionsschutzventils zu erläutern. So ist der erwähnte Schließkörper 7 als rotrationssymmetrischer, im Querschnitt etwa elliptischer Hohlkörper ausgebildet, der in der in Fig. 2 und 3 dargestellten Offenstellung von einem Medium umströmt werden kann. Die Formgebung des Schließkörpers 7 mit einer sogenannten Störkante 10 am Umfang und Dichtkanten 11 ist beispielsweise aus der eingangs genannten EP 1 579 134 B1 bekannt und bedarf keiner nochmaligen Erörterung an dieser Stelle.

Der Schließkörper 7 ist an einem Trägerrohr 12 befestigt, das zur mittelbaren Lagerung des Schließkörpers 7 auf einer zentralen, längsaxial angeordneten Führungsstange 13 über Gleitbuchsen 14, 15 längsaxial verschiebbar geführt ist. Die Führungsstange 13 selbst ist an ihren Enden jeweils in zylindrischen Haltestücken 16, 17 befestigt, die zur Optimierung der Strömungsverhältnisse durch das Ventil in Richtung der Flansche 8, 9 jeweils konisch verjüngt gestaltet sind. Die Haltestücke 16, 17 wiederum sind über vier noch näher zu erläuternde Aufhängungen A zentral in den rohrförmigen Gehäuseabschnitten 5, 6 der Gehäusehälften 3, 4 gehalten.

Zwischen der Führungsstange 13 und dem Trägerrohr 12 ist eine vorgespannte Schraubendruckfeder 18 eingesetzt, die sich einerseits an der fest mit der Führungsstange 13 verbundenen, (bezogen auf Fig. 2) linken Gleitbuchse 14 und andrerseits an der am rechten Ende des Trägerrohrs 12 befestigten, (bezogen auf Fig. 2) rechten Gleitbuchse 15 abstützt. Damit ist das Trägerrohr 12 entgegen der Schließbewegungsrichtung SB des Schließkörpers 7 - also nach rechts bezogen auf Fig. 2 und 3 - beaufschlagt und in Anlage im Haltestück 17 gehalten. Der Schließkörper 7 befindet sich damit in der in den Fig. 2 und 3 gezeigten Öffnungsstellung des Explosionsschutzventils und kann bei spezifizierten Strömungsgeschwindigkeiten eines durch das Ventil fließenden Mediums in dieser Öffnungsstellung stabil verharren.

Bei einer das Explosionsschutzventil in der Schließbewegungsrichtung durchlaufenden Explosionsdruckwelle wird der Schließkörper 7 entgegen der Beaufschlagung durch die Schraubendruckfeder 18 in diese Richtung schlagartig mitgenommen und mit seiner Dichtkante 11 gegen einen an der Innenseite des Gehäuses 1 angeordneten Dichtungsring 19 gepresst und das Explosionsschutzventil damit geschlossen. Damit sind die auf der der Explosionsquelle gegenüber liegenden Seite des Schliesskörpers angeordneten Anlagenteile, die über eine abgehende Rohrleitung am linken Flansch 8 angebunden sind, von der Explosionsdruckwelle geschützt und vom störseitigen Anlagenteil entkoppelt. In der in den Figuren nicht dargestellten Schließstellung des Schließkörpers 7 wird dieser über eine noch näher zu erörternde Verriegelungsvorrichtung V verriegelt, so dass das Ventil bis zu seiner manuell veranlassbaren Rücksetzung geschlossen bleibt.

Im Folgenden wird anhand der Fig. 2 bis 4 die spezielle Ausgestaltung des mit der Dichtkante 11 des Schließkörpers 7 zusammenwirkenden Dichtungsringes 19 des Explosionsschutzventils näher erläutert. So ist für die Aufnahme des Dichtungsringes 19 an der Innenseite 20 des Gehäuses 1 am Übergang des rohrförmigen Gehäuseabschnitts 5 zu der radialen Erweiterung in Richtung der Flanschverbindung 2 hin eine umlaufende, entgegen der Schließbewegungsrichtung SB offene Aufnahmetasche 21 zur Halterung des Dichtungsringes 19 vorgesehen. Auf ihrer radial nach innen weisenden Seite ist diese Aufnahmetasche 21 durch den Endbereich 22 des rohrförmigen Gehäuseabschnittes 5 selbst gebildet. Diesen umgibt der im Querschnitt abgekantete Schulterbereich 23 der Gehäusehälfte 3. In dieser Aufnahmetasche 21 ist der Dichtungsring 19 mit einem Verankerungsabschnitt 24 eingesteckt, der entsprechend der Querschnittsform der Aufnahmetasche 21 eine im Wesentlichen flach-rechteckige Querschnittsform aufweist. Auf der radial innen liegenden Seite können Rippen oder Widerhaken vorgesehen sein. Dadurch ist der massive Verankerungsabschnitt flexibler bei der Montage, bietet jedoch genügend Kraft gegen das Herausziehen auf. Die Einstecklänge E des Verankerungsabschnittes parallel zur Schließbewegungsrichtung SB ist dabei um etwa ein Drittel größer als die radiale Dicke D des Verankerungsabschnittes 24. Zur Festlegung des Verankerungsabschnittes 24 in der Aufnahmetasche 21 weist letztere radial außen am Schulterbereich 23 eine umlaufende Eindrückung 25 auf, mit der eine Formschlussverbindung zwischen Verankerungsabschnitt 24 und Aufnahmetasche 21 hergestellt wird.

Ein mit der Dichtkante 11 des Schließkörpers 7 in Schließstellung des Ventils zusammenwirkender Dichtabschnitt 26 des Dichtungsringes 19 liegt außerhalb der Aufnahmetasche 21 und entgegen der Schließbewegungsrichtung SB davor. Der Dichtungsabschnitt 26 greift also nicht in den freien Strömungsquerschnitt des rohrförmigen Gehäuseabschnitts 5 der Gehäusehälfte 3 hinein. Vielmehr geht er an seinem radial nach innen weisenden Rand 27 glatt in den rohrförmigen Gehäuseabschnitt 5 über, wozu der Rand 27 als der Wandungsdicke des rohrförmigen Gehäuseabschnitts 5 entsprechender Vorsprung ausgebildet ist. Ausgehend von dort ist die vom Medium durch das Ventil angeströmte Innenkontur 28 des Dichtabschnittes 26 nach außen ballig unter Ausbildung eines Viertelkreises im Querschnitt geformt. Weiter geht dann die Innenkontur 28 zum radial nach außen weisenden Rand 29 hin in eine umlaufende Dichtlippe 30 über, mit der der Dichtabschnitt 26 an die Innenseite 20 der Gehäusehälfte 3 anschließt.

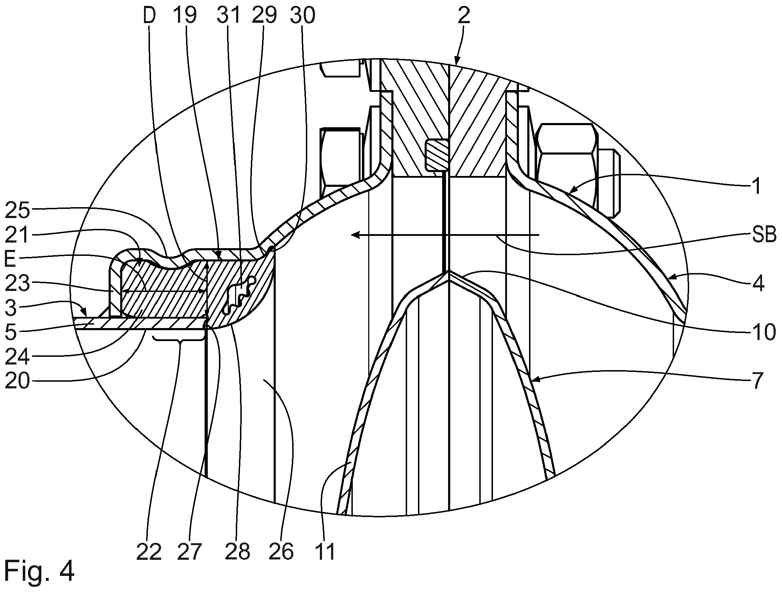

Durch die vorstehend erörterte Formgebung des Dichtungsringes 19 insbesondere im Bereich des Dichtabschnittes 26 wird - wie insbesondere aus Fig. 4 hervorgeht - der freie Querschnitt des Ventils zwischen offenem Schließkörper 7 und Innenseite 20 des Gehäuses 1 strömungstechnisch optimiert, da die Übergänge relativ glattflächig ausgestaltet, keine Hinterschneidungen vorgesehen und keine Teile der Dichtung in den freien Querschnitt des rohrförmigen Gehäuseabschnittes 5 eingreifen. Dies hat auch Vorteile hinsichtlich einer Vermeidung von Produktrückständen und damit einer verbesserten Hygiene bei entsprechendem Einsatz des Ventils in sensiblen Branchen wie Anlagen zur Herstellung von Nahrungsmittel oder Pharmazeutika.

Wie weiter insbesondere aus Fig. 4 hervorgeht, ist im Dichtabschnitt 26 des Dichtungsringes 19 eine umlaufende, strukturierte Hohlkammer 31 vorgesehen, wodurch der Dichtungsring 19 dort eine besondere Flexibilität erhält. Diese trägt dazu bei, dass der Schließkörper 7 mit seiner Dichtkante 11 sauber und satt anliegen kann. Dabei können Toleranzen innerhalb der gesamten Anordnung aufgrund der Schweißverbindungen, Montageabweichungen und Unrundheiten des Schließkörpers 7 wirkungsvoll ausgeglichen werden.

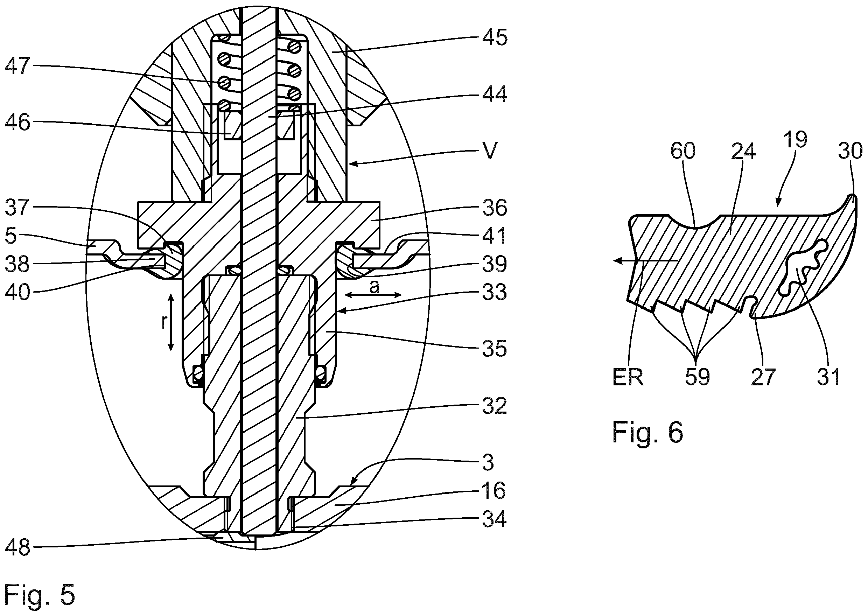

Bei der in Fig. 6 gezeigten Weiterbildung des Dichtungsringes 19 sind auf der radial inneren Seite des Verankerungsabschnittes 24 entgegen der Einsteckrichtung ER weisende, rampenartige Widerhaken-Verankerungsvorsprünge 59 angeformt, die der oben beschriebenen Montagevereinfachung und Stabilisierung der Verankerung des Dichtungsringes 19 in der Aufnahmetasche 21 dienen. Auf der radial äußeren Seite des Dichtungsring 19 gemäß Fig. 6 ist noch eine flache, im Querschnitt kreisabschnittförmige Nut 60 dargestellt, die mit der Eindrückung 25 am Gehäuse 1 zusammenwirkt.

Anhand der Fig. 2, 3 und 5 wird nun der weitere Aufbau des Explosionsschutzventils hinsichtlich der Aufhängung A und der Verriegelungsvorrichtung V sowie seiner Funktionsweise näher beschrieben. Die erwähnten Aufhängungen A der Haltestücke 16, 17 sind - bis auf die Ausrüstung noch näher zu erörternder Funktionsmittel - bei beiden Haltestücken 16, 17 vom Grundsatz her übereinstimmend ausgebildet. Die vier im gezeigten Ausführungsbeispiel vorhandenen Aufhängungen A werden demgemäß anhand der in Fig. 2 mit der Einzelheit V umkreisten und in Fig. 5 vergrößert dargestellten Einheit näher erörtert. Die Haltestücke 16, 17 tragen dabei als Lageranordnung L die jeweiligen Enden der Führungsstange 13 und sind über eine Aufhängetraverse 32 und einen diese haltenden Aufnahmeadapter 33 unter spielbehafteter Lagerung an der jeweiligen Gehäusehälfte 3, 4 des Gehäuses 1 gehalten. Dazu ist die Aufhängetraverse 32 in ein entsprechendes Innengewinde 34 im Haltestück 16, 17 eingeschraubt. Gleichermaßen wird die Aufhängetraverse 32 von einer Gewindebuchse 35 am Aufnahmeadapter 33 aufgenommen. Letzterer weist eine Ringschulter 36 auf, mit der sich der Aufnahmeadapter 33 auf einem flexiblen Haltering 37 abstützt. Letzterer ist auf dem Rand 38 der den Aufnahmeadapter 33 beherbergenden Aufnahmeöffnung 39 nach Art eines Kantenschutzprofils befestigt. Dazu sitzt der Haltering 37 mit seiner Lagernut 40 auf dem Rand der Aufnahmeöffnung 39. Wie insbesondere aus Fig. 5 deutlich wird, ist der Aufnahmeadapter 33 durch die gezeigte Konstruktion spielbehaftet gelagert. Sein Lagerspiel wirkt sowohl in radialer Richtung r als auch in axialer Richtung a (Fig. 5). Wie besonders aus Fig. 3 und 5 deutlich wird, sind die Aufnahmeöffnungen 39 für die Aufhängungen A jeweils im Bereich planer Lagerflächen 41 an den ansonsten zylindrischen Gehäuseabschnitten 5, 6 angeordnet. Diese planen Lagerflächen 41 sind in die entsprechenden Gehäuseabschnitte 5, 6 eingeprägt.

Für eine stabile Halterung der beiden Haltestücke 16, 17 werden die jeweiligen Aufhängetraversen 32 mit den Aufnahmeadaptern 33 in die entsprechenden Aufnahmeöffnungen 39 eingesetzt und die jeweiligen Gewindeverbindungen über das Innengewinde 34 und die Gewindebuchse 35 angezogen. Etwaige Maßabweichungen innerhalb der Konstruktionsteile werden dabei durch die spielbehaftete Lagerung der Aufnahmeadapter 33 in den Aufnahmeöffnungen 39 über die flexiblen Halteringe 37 ausgeglichen.

Bei dem rechten Haltestück 17 dient die Aufhängung A nur zum Lagern des Haltestücks 17. Dementsprechend ist der Aufnahmeadapter 33 dort als Verschlussdeckel 42 nach außen abgeschlossen ausgebildet.

Die beiden Aufhängungen A des in Schließbewegungsrichtung SB, also der Explosionsquelle gegenüber liegenden Seite vom Schließkörper 7 liegenden Haltestücks 16, sind mit zusätzlichen Funktionsmitteln belegt, nämlich zum einen die bezogen auf Fig. 2 und 3 obere Aufhängung A mit der Verriegelungsvorrichtung V und zum anderen die untere Aufhängung A mit einer Abtasteinrichtung C. Diese Aufhängungen A erfüllen also eine Doppelfunktion, indem sie zum einen das Haltestück 16 lagern und zum anderen den Zugriff der zusätzlichen Funktionsmittel auf die Funktionsmechanik des Explosionsschutzventils gewährleisten.

Diese Funktionsmechanik weist an den Enden des Trägerrohrs 12 ein als Konusstumpf ausgebildetes Fangstück 43 auf, wobei im gezeigten Ausführungsbeispiel lediglich das auf der Seite der Verriegelungsvorrichtung V sitzende Fangstück 43 funktionsrelevant ist. Das am anderen Ende angeordnete Fangstück 43 hat zum einen eine funktionale Bedeutung dann, wenn statt des gezeigten unidirektional wirkenden Explosionsschutzventils ein bidirektionales Ventil verwendet wird. Zum anderen hat es bei dem gezeigten, unidirektional wirkenden Ventil die Funktion, die Mittelstellung des Schließkörpers gegenüber der Flanschverbindung 2 einstellen zu können. Dafür wäre die in den Fig. 2 und 3 gezeigte Konstruktion an der Trennebene T der Flanschverbindung 2 spiegelsymmetrisch mit beiderseitigen Verriegelungsvorrichtungen V und Abtasteinrichtungen C aufzubauen.

Die in die links oben angeordnete Aufhängung A integrierte Verriegelungsvorrichtung V weist als zentrales Teil eine radial verlaufende Verriegelungsstange 44 auf, die in einem auf den Adapter 33 geschraubten Sockel 45, im Aufnahmeadapter 33 selbst und in der Aufhängetraverse 32 radial verschiebbar geführt ist. Über einen Bund 46 wirkt eine als Schraubendruckfeder ausgebildete Auslösefeder 47, um die Verriegelungsstange 44 im Auslösefall radial nach innen zu stoßen. In der gezeigten Ruhestellung ist die Verriegelungsstange 44 nach oben zurückgezogen und wird in dieser Ruhestellung von einer im Haltestück 16 axial verschiebbaren Stützbuchse 48 zurückgehalten. Letztere ist entgegen der Schließbewegungsrichtung SB von einer weiteren Schraubdruckfeder 49 beaufschlagt.

Am oberen Ende des Sockels 45 ist eine Rückholmechanik 50 ausgeführt, die durch offenkundige Vorbenutzung bekannt ist. Da diese Rückholmechanik 50 für die Erfindung selbst keine zentrale Bedeutung hat, soll zur Vermeidung unnötiger Länglichkeiten auf eine detaillierte Beschreibung verzichtet werden.

Auf der der Verriegelungsvorrichtung V gegenüberliegenden Seite ist die Abtasteinrichtung C in die Aufhängung A integriert, wobei in diesem Falle eine Taststange 51 im Aufnahmeadapter 33 und der entsprechenden Aufhängetraverse 32 radial verschiebbar geführt ist. Auf den Aufnahmeadapter 33 ist eine Lagerkappe 52 aufgeschraubt, in die wiederum eine Schraubendruckfeder 53 zur Beaufschlagung der Taststange 51 über einen daran befestigten Bund 54 in radialer Richtung nach innen eingesetzt ist. Am aus der Lagerkappe 52 hinausragenden Ende der Taststange 51 ist ein Taststück 55 angebracht, das mit einem Näherungsschalter 56 zusammenwirkt. Letzterer ist an einer Lagerstrebe 57 unten am rohrförmigen Gehäuseabschnitt 5 gehalten. Alternativ kann auch ein mechanischer Schalter angebracht werden, der in radialer Verlängerung der Taststange 51 angebracht und auch an der Lagerstrebe 57 mittels eines Adapterblechs montiert ist.

Bei einer das Explosionsschutzventil durchlaufenden, schlagartigen Druckwelle aufgrund einer Explosion in einem rechts vom gezeigten Ventil liegenden Anlagenteil wird durch die Druckbeaufschlagung der Schließkörper 7 schlagartig entgegen der Kraft der Schraubendruckfeder 18 in Schließbewegungsrichtung SB nach links bezogen auf Fig. 2 und 3 verschoben und dichtet das Ventil in seiner Schließstellung durch Anlage gegen den Dichtungsring 19 ab. Mit der Bewegung des Schließkörpers 7 wird das Trägerrohr 12 mit dem Fangstück 43 verschoben, das gegen die im Haltestück 16 verschiebbar gelagerte Stützbuchse 48 schlägt und diese ebenfalls entgegen der Wirkung der Schraubendruckfeder 49 nach links verschiebt. Dadurch kommt die Verriegelungsstange 44 frei, die bei entsprechender Auslenkung des Trägerrohrs 12 mit dem Schließkörper 7 nach links hinter die rückwärtige Fangkante 58 des Fangstücks 43 einfährt. Damit wird der Schließkörper 7 und entsprechend das Explosionsschutzventil in seiner geschlossenen Stellung verriegelt.

Bei dem beschriebenen Auslösevorgang schiebt gleichzeitig der konische Frontabschnitt des Fangstücks 43 die über einen Schlitz in der Stützbuchse 48 nach innen eingreifende Taststange 51 entgegen der Wirkung der Schraubendruckfeder 53 nach außen. Dadurch fährt das Taststück 55 vom Näherungsschalter 56 weg, wodurch dieses ein elektrisches Signal an eine entsprechende (nicht dargestellte) Steuerung abgeben kann, dass das Explosionsschutzventil ausgelöst hat. Je nach benötigtem Signal der Steuerung kann alternativ auch das Halteblech des Näherungsschalters 56 um 180° gedreht werden und das Taststück 55 fährt in den Tastbereich des Näherungsschalters 56. Bei Verwendung eines mechanischen Schalters entfällt das Taststück und die Taststange betätigt direkt den mechanischen Schalter.

Für die Rückkehr des Explosionsschutzventils in die in Fig. 2 und 3 gezeigte Offenstellung wird über die Rückholmechanik 50 die Verriegelungsstange 44 nach oben zurückgefahren. Dadurch kommt das Fangstück 43 frei, das Trägerrohr 12 mit dem Schließkörper 7 kann unter dem Einfluss der Schraubendruckfeder 18 wieder in die Offenstellung zurückfahren. Dabei wird die Stützbuchse 48 wieder in die in Fig. 2 gezeigte Stützstellung unter der zurückgefahrenen Verriegelungsstange 44 verbracht. Gleichzeitig kann die Taststange 51 wieder unter dem Einfluss der Schraubendruckfeder 53 in die in Fig. 2 und 3 gezeigte Taststellung innerhalb der Stützbuchse 48 einfahren.

## Patentansprüche

1. Explosionsschutzventil zur Entkopplung von Anlagen- oder Werkteilen zum Einbau in eine Rohrleitung, umfassend
- ein Gehäuse (1),
- einen innerhalb des Gehäuses (1) an einer Führungsstange (13) axial geführten Schließkörper (7), der aus einer definierten Offenstellung bei einer Druck- oder Sogwelle in der Rohrleitung in wenigstens einer Schließbewegungsrichtung in eine dichtende Schließstellung verschiebbar ist,
- eine mit dem Schließkörper (7) in Wirkverbindung stehende Federanordnung (18) an der Führungsstange (13) zum Halten des Schließkörpers (7) in der Offenstellung,
- einen Dichtungsring (19) an der Innenseite des Gehäuses (1), gegen den der Schließkörper (7) in seiner Schließstellung pressbar ist, sowie
- eine an der Innenseite (20) des Gehäuses (1) angelegte, offene Aufnahmetasche (21) zur Halterung des Dichtungsrings (19),
- wobei die Aufnahmetasche (21) auf ihrer radial nach innen weisenden Seite durch einen rohrförmigen Gehäuseabschnitt (5) des Gehäuses (1) abgegrenzt ist,
- wobei ein mit dem Schließkörper (7) in der Schließstellung des Ventils zusammenwirkender Dichtabschnitt (26) des Dichtungsringes (19) außerhalb und entgegen der Schließbewegungsrichtung (SB) vor der Aufnahmetasche (21) angeordnet ist, und wobei der Dichtabschnitt (26) des Dichtungsringes (19) an seinem radial nach außen weisenden Rand (29) in einer umlaufenden Dichtlippe (30) an die Innenseite (20) des Gehäuses (1) anschließt,
**dadurch gekennzeichnet, dass** der Dichtabschnitt (26) des Dichtungsringes (19) an seinem radial nach innen weisenden Rand (27) glatt in den rohrförmigen Gehäuseabschnitt (5) des Gehäuses (1) übergeht.

2. Explosionsschutzventil nach Anspruch 1, **dadurch gekennzeichnet,**
**dass** die Aufnahmetasche (21) entgegen der Schließbewegungsrichtung (SB) des Schließkörpers (7) offen ist.

3. Explosionsschutzventil nach einem der vorgenannten Ansprüche,
**dadurch gekennzeichnet, dass** der Dichtungsring (19) mit einem Verankerungsabschnitt (24) in die Aufnahmetasche (21) eingesteckt ist, dessen Querschnittsform im wesentlichen flach-rechteckig mit einer Einstecklänge (E) ist, die um mindestens ein Drittel größer als die radiale Dicke (D) des Verankerungsabschnitts (24) ist.

4. Explosionsschutzventil nach einem der vorgenannten Ansprüche, **gekennzeichnet durch** eine Formschluss- und/oder Klebeverbindung zur Festlegung des Dichtungsringes (19) in der Aufnahmetasche (21).

5. Explosionsschutzventil nach einem der vorgenannten Ansprüche,
**dadurch gekennzeichnet, dass** die vom durch das Ventil strömenden Medium kontaktierbare Innenkontur (28) des Dichtungsringes (19) ballig, insbesondere etwa viertelkreisförmig ausgebildet ist.

6. Explosionsschutzventil nach einem der vorgenannten Ansprüche,
**dadurch gekennzeichnet, dass** der Dichtungsring (19) als Hohlkammerprofil mit einer umlaufenden Hohlkammer (31) ausgebildet ist.

7. Explosionsschutzventil nach Anspruch 6, **dadurch gekennzeichnet, dass** die Hohlkammer (31) ausschließlich im Bereich des Dichtabschnittes (26) verläuft.

8. Explosionsschutzventil mindestens nach Anspruch 3, **dadurch gekennzeichnet, dass** der Verankerungsabschnitt (24) des Dichtungsringes (19) mit entgegen der Einsteckrichtung wirkenden Verankerungsvorsprüngen (59) versehen ist.

## Claims

1. An explosion protection valve for decoupling system parts or workpieces for the installation in a pipeline, comprising
- a housing (1),
- a closing body (7) which is axially guided inside the housing (1) on a guide rod (13) and can be shifted from a defined open position into a sealing closed position in the event of a pressure or suction wave in the pipeline in at least one closing movement direction,
- a spring assembly (18), which is in operative connection to the closing body (7), on the guide rod (13) for holding the closing body (7) in the open position,
- a sealing ring (19) on the inner side of the housing (1), against which the closing body (7) can be pressed in its closed position as well as
- an open receiving pocket (21) applied to the inner side (20) of the housing (1) for holding the sealing ring (19),
- wherein the receiving pocket (21) is delimited on its radially inwardly facing side by a tubular housing portion (5) of the housing (1),
- wherein a sealing portion (26) of the sealing ring (19) interacting with the closing body (7) in the closed position is arranged outside and against the closing movement direction (SB) in front of the receiving pocket (21) and wherein the sealing portion (26) of the sealing ring (19) adjoins the inner side (20) of the housing (1) at its radially outwardly pointing rim (29) in a circumferential sealing lip (30),
**characterized in that** the sealing portion (26) of the sealing ring (19) at its radially inwardly pointing rim (27) merges smoothly into the tubular housing portion (5) of the housing (1).

2. An explosion protection valve according to claim 1, **characterized in that** the receiving pocket (21) is open counter to the closing movement direction (SB) of the closing body (7).

3. An explosion protection valve according to any one of the preceding claims, **characterized in that** the sealing ring (19) is inserted into the receiving pocket (21) by means of an anchoring portion (24), the cross-sectional shape of which is essentially flat-rectangular with an insertion length (E) which is greater by at least one third than the radial thickness (D) of the anchoring portion (24).

4. An explosion protection valve according to any one of the preceding claims, **characterized by a** form-fitting and/or adhesive connection for fixing the sealing ring (19) in the receiving pocket (21).

5. An explosion protection valve according to any one of the preceding claims, **characterized in that** the inner contour (28) of the sealing ring (19), which can be contacted by the medium flowing through the valve, is configured spherically, in particular to be approximately quarter-circular.

6. An explosion protection valve according to any one of the preceding claims, **characterized in that** the sealing ring (19) is formed as a hollow chamber profile with a circumferential hollow chamber (31).

7. An explosion protection valve according to claim 6, **characterized in that** the hollow chamber (31) extends exclusively in the region of the sealing portion (26).

8. An explosion protection valve at least according to claim 3, **characterized in that** the anchoring portion (24) of the sealing ring (19) is provided with anchoring projections (59) acting counter to the insertion direction.

## Revendications

1. Soupape antidéflagrante pour le désaccouplement de parties d'installation ou d'usine, pour le montage dans une tuyauterie, comprenant
- un boîtier (1),
- un corps de fermeture (7), guidé axialement à l'intérieur du boîtier (1) sur une tige de guidage (13), qui peut être déplacé d'une position ouverte définie en cas d'onde de pression ou d'aspiration dans la tuyauterie dans au moins une direction de mouvement de fermeture dans une position de fermeture étanche,
- un dispositif à ressort (18) en liaison active avec le corps de fermeture (7) sur la tige de guidage (13) pour maintenir le corps de fermeture (7) dans la position ouverte,
- une bague d'étanchéité (19) sur le côté intérieur du boîtier (1), contre laquelle le corps de fermeture (7) peut être pressé dans sa position de fermeture, ainsi que
- une poche de réception ouverte (21) placée sur la face intérieure (20) du boîtier (1) pour maintenir la bague d'étanchéité (19),
- la poche de réception (21) étant délimitée sur son côté orienté radialement vers l'intérieur par une section de boîtier tubulaire (5) du boîtier (1),
- une section d'étanchéité (26) de la bague d'étanchéité (19) coopérant avec le corps de fermeture (7) dans la position de fermeture de la soupape étant disposée à l'extérieur et à l'opposé de la direction du mouvement de fermeture (SB) devant la poche de réception (21), et la section d'étanchéité (26) de la bague d'étanchéité (19) se raccordant au niveau de son bord (29) orienté radialement vers l'extérieur dans une lèvre d'étanchéité périphérique (30) à la face intérieure (20) du boîtier (1),
**caractérisée en ce que** la section d'étanchéité (26) de la bague d'étanchéité (19) se raccorde de manière lisse, au niveau de son bord (27) orienté radialement vers l'intérieur, à la section de boîtier tubulaire (5) du boîtier (1).

2. Soupape antidéflagrante selon la revendication 1, **caractérisée en ce que** ladite poche de réception (21) est ouverte dans le sens opposé à la direction du mouvement de fermeture (SB) du corps de fermeture (7).

3. Soupape antidéflagrante selon l'une quelconque des revendications précédentes, **caractérisée en ce que** la bague d'étanchéité (19) est insérée dans la poche de réception (21) par une section d'ancrage (24) dont la forme de la section transversale est sensiblement rectangulaire plate avec une longueur d'insertion (E) qui est supérieure d'au moins un tiers à l'épaisseur radiale (D) de la section d'ancrage (24).

4. Soupape antidéflagrante selon l'une quelconque des revendications précédentes, **caractérisée par** une liaison par complémentarité de forme et/ou par collage pour fixer la bague d'étanchéité (19) dans la poche de réception (21).

5. Soupape antidéflagrante selon l'une quelconque des revendications précédentes, **caractérisée en ce que** le contour intérieur (28) de la bague d'étanchéité (19), qui peut être mis en contact avec le milieu s'écoulant à travers la soupape, est bombé, en particulier approximativement en forme de quart de cercle.

6. Soupape antidéflagrante selon l'une quelconque des revendications précédentes, **caractérisée en ce que** la bague d'étanchéité (19) est réalisée sous forme de profilé à chambre creuse avec une chambre creuse périphérique (31).

7. Soupape antidéflagrante selon la revendication 6, **caractérisée en ce que** la chambre creuse (31) s'étend exclusivement dans la zone de la section d'étanchéité (26).

8. Soupape antidéflagrante selon au moins la revendication 3, **caractérisée en ce que** la section d'ancrage (24) de la bague d'étanchéité (19) est pourvue de saillies d'ancrage (59) agissant dans le sens opposé à la direction d'insertion.
